# EUROPÄISCHE PATENTANMELDUNG

(11) **EP 4 640 488 A1**
(43) Veröffentlichungstag der Anmeldung: **29.10.2025**
(21) Anmeldenummer: 25159078.2
(22) Anmeldetag: 20.02.2025
(51) Int. Cl.: B60P 3/34, B60P 3/38, B60J 7/16

(54) **VARIABLE OBERSCHALE FÜR EIN SCHLAFDACH**

(30) Priorität: 25.04.2024 DE 102024111718
(71) Anmelder: Hymer GmbH & Co. KG, 88339 Bad Waldsee (DE)
(72) Erfinder: Sawetzki, Bernhard, 88364 Wolfegg (DE); Jablonski, Andre, 88436 Eberhardzell (DE)
(74) Vertreter: Müller Schupfner & Partner Patent- und Rechtsanwaltspartnerschaft mbB (Muc)

(57) **Zusammenfassung**

Die Erfindung betrifft eine Oberschale für ein Aufstelldach oder ein Schlafdach, aufweisend zumindest eine Basisschale und aufweisend mindestens ein Randelement, wobei das mindestens eine Randelement dazu eingerichtet ist, die Basisschale entlang zumindest einer Raumrichtung randseitig zu verlängern, wobei das mindestens eine Randelement entlang zumindest einer Raumrichtung relativ zu der Basisschale verstellbar und/oder das mindestens eine Randelement austauschbar ist und mit der Basisschale verbindbar ist. Des Weiteren betrifft die Erfindung eine Anordnung und ein Verfahren.

## Beschreibung

Die Erfindung betrifft eine Oberschale für ein Aufstelldach oder ein Schlafdach, eine Anordnung mit einer Oberschale und einer Unterschale und ein Verfahren zum Herstellen einer Oberschale.

Im Bereich von Freizeitfahrzeugen sind sogenannte Camper Vans bekannt, bei welchen der Laderaum eines Transportfahrzeugs umgebaut wird, um beispielsweise einen Übernachtungsplatz für Personen bereitzustellen. Bei einem derartigen Umbau oder Ausbau wird regulär die Außenhaut des Laderaums zum Einbringen von Fenstern und Schlafdächern oder Aufstelldächern verändert.

Bei Freizeitfahrzeugen mit einem Schlafdach wird üblicherweise eine Konstruktion aus einer Oberschale und einer Unterschale auf dem Dach des Transportfahrzeugs befestigt und eine Öffnung in das Dach des Transportfahrzeugs eingebracht. Die Öffnung dient als Zugang zum Schlafdach, welches zwischen der Unterschale und der Oberschale aufgespannt wird. Üblicherweise kann die Oberschale durch eine Hubmechanik, beispielsweise mit Hilfe von Gasfedern, von der Unterschale beabstandet werden, sodass nach einem Aufklappen der Oberschale ein Schlafraum entsteht. Der Schlafraum wird durch seitliche Stoff- und/oder Kunststoffwände begrenzt. Die Unterschale liegt regulär auf dem Dach des Transportfahrzeugs auf und dient als Auflagefläche für eine Matratze. Wird das Schlafdach nicht benötigt, kann die Oberschale abgesenkt werden. Hierdurch werden die Unterschale und die Matratze platzsparend von der Oberschale bedeckt.

Aufgrund der Vielfalt der unterschiedlichen Fahrzeuge und der entsprechend unterschiedlichen Fahrzeuglängen und Dachgeometrien der Fahrzeugdächer, auf welchen ein derartiges Schlafdach oder Aufstelldach befestigt werden kann, müssen jeweils individuell angefertigte Oberschalen für jedes Fahrzeugmodell hergestellt und gelagert werden. Für jede Fahrzeugvariante bzw. jedes Fahrzeugmodell muss eine hierfür spezifisch angefertigte Oberschale hergestellt und gelagert werden. Aufgrund der Dimensionierung der Oberschalen und der resultierenden Bauteilvielfalt steigt der erforderliche Raum für die Lagerung, die Vormontage und die Endmontage der Oberschalen. Darüber hinaus werden für jedes Fahrzeugmodell spezifisch angefertigte Werkzeuge zum Herstellen der Oberschalen benötigt, die sich nachteilig auf die Kosteneffizienz und die Geschwindigkeit der Herstellung auswirken können.

Es ist daher die Aufgabe der vorliegenden Erfindung, eine Oberschale und ein Verfahren zum Herstellen von Oberschalen zu schaffen, die eine Reduzierung der Bauteilvielfalt mit einhergehender Einsparung des benötigten Raums für die Lagerung und die Montage der Oberschalen ermöglichen können.

Die Erfindung erreicht diese Aufgabe mit den Merkmalen der Ansprüche 1, 9 und 12. Vorteilhafte Ausgestaltungen sind in den Unteransprüchen und der Beschreibung angegeben.

Gemäß einem Aspekt der vorliegenden Erfindung wird eine Oberschale für ein Aufstelldach oder ein Schlafdach bereitgestellt. Die Oberschale weist zumindest eine Basisschale und mindestens ein Randelement auf. Das mindestens eine Randelement ist dazu eingerichtet, die Basisschale entlang zumindest einer Raumrichtung randseitig zu verlängern.

Ein Verlängern kann hierbei ein Vergrößern einer Abmessung in Höhenrichtung und/oder in Breitenrichtung und/oder in Längenrichtung der Oberschale oder eines Fahrzeugs sein, auf welchem die Oberschale eingesetzt werden kann. Hierdurch kann die Dimension der Oberschale variabel an unterschiedliche Längen und Breiten eines Fahrzeugmodells und insbesondere eines entsprechenden Fahrzeugdachs angepasst werden. Die mindestens eine Basisschale und das mindestens eine Randelement können miteinander verbunden und ggf. lösbar, relativ zueinander angeordnet sein. Beispielsweise kann das Randelement mit Hilfe einer Überlappverbindung in die Basisschale hineingeschoben oder aus der Basisschale hinausgeschoben werden. Nach einem Einstellen einer bestimmten Dimension können das Randelement und die Basisschale fest miteinander verbunden bzw. fixiert werden. Dieser Schritt kann beispielsweise durch Schweißen, Nieten, Löten, Verschrauben und dergleichen erfolgen.

Bei einer alternativen oder zusätzlichen Ausgestaltung ist das mindestens eine Randelement entlang zumindest einer Raumrichtung relativ zu der Basisschale verstellbar. Alternativ oder zusätzlich ist das zumindest eine Randelement austauschbar und mit der Basisschale verbindbar. Hierbei können ein oder mehrere Randelemente vorgesehen sein, die voneinander abweichende Abmessungen aufweisen können. Wird eine bestimmte Länge oder Breite bzw. Ausdehnung entlang der Längenrichtung oder Ausdehnung entlang der Breitenrichtung benötigt, kann ein entsprechend geformtes Randelement ausgewählt und mit der Basisschale verbunden werden. Diese Maßnahme kann einseitig oder beidseitig erfolgen. Somit kann an mindestens einem Randabschnitt der Basisschale mindestens ein Randelement angeordnet und mit der Basisschale verbunden werden.

Die erfindungsgemäße Oberschale ermöglicht eine besonders leichte Bauweise mit einer variablen Dimensionierung, durch die ein Bereitstellen von großen Lagerflächen entfallen kann. Insbesondere kann die erforderliche Bauteilvielfalt reduziert oder die sich verändernden Bauteile verkleinert werden, um die Handhabung, Lagerung und Montage zu erleichtern. Insbesondere ermöglicht der modulare Aufbau der Oberschale eine technisch besonders einfache Anpassung der Oberschale an unterschiedliche Fahrzeugmodelle. Es muss keine einteilige Oberschale für jedes unterstützte Fahrzeugmodell separat hergestellt und gelagert werden.

Unter einem Schlafdach wird hier eine Konstruktion an einem Fahrzeug, wie beispielsweise einem Freizeitfahrzeug, mit einem Aufstelldach verstanden. Das Aufstelldach kann gemäß einer ersten Alternative einen Schlafbereich beherbergen. Das Schlafdach umfasst also typischerweise ein Aufstelldach mit einer Oberschale, welche zur Schaffung des Schlafraumes nach oben geklappt werden kann, und eine Unterschale, auf welche eine Schlafunterlage wie eine Matratze aufgelegt werden kann. Der Schlafraum wird typischerweise durch Ausklappen des Aufstelldaches mit der Oberschale gebildet, wobei sich die Seitenwände, die z.B. aus verschiedenen Zeltplanen hergestellt sind, entfalten. Unter einem Schlafdach wird hier also nicht nur das aufstellbare Dachelement bzw. das Aufstelldach verstanden, sondern sämtliche Elemente, die einen Schlafraum bzw. Schlafbereich auf dem Dach eines Fahrzeugs bilden, und der beispielsweise durch eine Luke vom Innenraum des Fahrzeugs zugänglich ist. Unter einem Schlafdach wird hingegen kein Dachzelt verstanden, welches zwar auch auf dem Dach eines Fahrzeugs angeordnet ist, welches jedoch nicht direkt vom Fahrzeuginnenraum zugänglich ist. Alternativ kann das Aufstelldach auch lediglich zur Schaffung von Raumhöhe dienen. In diesem Fall ist nicht zwingend eine Unterschale vorhanden.

Die jeweiligen Randelement können vorteilhafterweise an Formen und Abmessungen unterschiedlicher OEM-Kastenwagenchassis angepasst sein oder anpassbar sein. Dabei können neben der Dimension auch unterschiedliche Formen von Fahrzeugdächern durch die Randelemente, beispielsweise durch Bombierung, unterstützt bzw. nachgebildet werden.

Die erfindungsgemäße Oberschale ermöglicht die Ausstattung einer höheren Anzahl an Fahrzeugmodellen, die in einer Absatzsteigerung resultieren kann. Darüber hinaus wird die Möglichkeit eröffnet, verschiedene, vorher nicht rentable Technologien in Betracht zu ziehen.

Die Oberschale kann technisch besonders einfach variabel in ihrer Dimension ausgestaltet sein, wenn das mindestens eine Randelement zumindest bereichsweise mit der Basisschale überlappend angeordnet und relativ zu der Basisschale verstellbar ausgeführt ist. Bevorzugterweise ist das mindestens eine Randelement dazu eingerichtet, mindestens einen Rand der Basisschale zu verbreitern und/oder zu verlängern, wobei das mindestens eine Randelement ortsfest mit der Basisschale verbindbar ist.

Nach einer weiteren Ausführungsform ist das mindestens eine Randelement durch mindesten eine Schiene und/oder eine Überlappverbindung überlappend mit der Basisschale verbunden und relativ zu der Basisschale verschiebbar ausgeführt.

Durch diese Maßnahme kann eine besonders flexible Breiten- und/oder Längenanpassung der Oberschale realisiert werden. Die jeweiligen Kanten und Ecken der Basisschale und/oder des mindestens einen Randelements können abgerundete oder gebördelte Kanten aufweisen, um ein Verletzungsrisiko bei der Montage der Oberschale zu minimieren.

Eine Anpassung der Oberschale an unterschiedlich dimensionierte Fahrzeugdächer und unterschiedlich geformte Fahrzeugdächer kann technisch besonders einfach umgesetzt werden, wenn eine Länge und/oder eine Breite der Basisschale durch das mindestens eine austauschbar ausgestaltete Randelement einstellbar ist. Bevorzugterweise ist die Länge und/oder eine Breite der Basisschale durch mindestens ein Randelement aus einer Gruppe von Randelementen mit unterschiedlichen Abmessungen einstellbar ist. Hierdurch kann neben der Variation der Länge und der Breite auch eine Formvariation und eine Funktionsvariation realisiert werden. Beispielsweise können mehrere Randelemente für eine fahrerseitige Kante der Basisschale vorgesehen sein. Je nach benötigter Abmessung und benötigter Funktion kann ein bestimmtes Randelement von mehreren verschiedenen Randelementen gewählt und montiert werden.

Gemäß einem weiteren Ausführungsbeispiel ist die Basisschale durch eine Verbindung mit mindestens einem Randelement mit mindestens einer Funktion ausstattbar. Insbesondere kann die Funktion eine Ausstattungsvariante sein, wie beispielsweise Regenrinne, integrierte Aufnahmeelemente für ein Vordach oder Vorzelt, integrierte Markise und dergleichen sein. Durch diese Maßnahme können Variationen für ein bestimmtes Randelement realisiert werden, die mit unterschiedlichen Funktionen oder Merkmalen ausgestattet sind. Ein Randelement kann beispielsweise mit einer vordefinierten Form und Abmessung ohne zusätzliche Komponenten oder Funktionen oder mit einer oder mehreren derartigen Komponenten und Funktionen ausgestattet sein. Je nach Kundenwunsch kann das hierfür vorgesehene Randelement aus einem Lager bezogen und an die Basisschale montiert werden. Bevorzugterweise können die Randelemente eine möglichst geringe Abmessung aufweisen, um einen benötigten Bedarf an Lagerfläche zu minimieren.

Die modular aufgebaute Oberschale kann in eine einteilige Komponente transformiert werden, wenn die Basisschale und das mindestens eine Randelement durch eine stoffschlüssige, eine formschlüssige und/oder reibschlüssige Verbindung miteinander verbindbar sind.

Bei einer alternativen oder zusätzlichen Ausgestaltung sind die Basisschale und das mindestens eine Randelement durch ein Einbringen eines Schaumkerns und/oder einer Rahmenstruktur miteinander verbindbar. Hierdurch kann die Oberschale, die beispielsweise aus mindestens einer Basisschale und mindestens einem Randelement besteht, durch die klebende Wirkung des Schaumes des Schaumkerns zu einer einteiligen Komponente kombiniert werden.

Je nach Ausgestaltung kann auch ein Klebstoff eingesetzt werden, um die mindestens eine Basisschale und das mindestens eine Randelement miteinander zu koppeln. Eine derartige Verbindung durch Kleben oder Ausschäumen kann mit oder ohne den Einsatz eines zusätzlichen Aktivators erfolgen.

In der Oberschale können bei Bedarf verschiedene Funktionskomponenten, wie Heizsysteme integriert werden.

Nach einer weiteren Ausführungsform weisen die Basisschale und das mindestens eine Randelement eine Oberseite und eine Unterseite auf. Vorteilhafterweise ist auf der Unterseite der Oberschale ein Hohlraum ausgebildet und der Schaumkern und/oder eine Rahmenstruktur sind in den Hohlraum einbringbar. Somit kann eine Dämmung in die Oberschale eingebracht werden, die weitergehende Funktionen erfüllt. Zu derartigen Funktionen können eine strukturelle Stabilisierung und die Bereitstellung von Heizleistung und/oder die Bereitstellung von elektronischen Geräten, wie beispielsweise Bildschirmen oder Lautsprechern oder Leuchtmitteln oder Sensorik, zählen.

Das Bereitstellen einer Heizungsfunktion kann beispielsweise durch im Verbund eingebrachte Heizfolien ermöglicht werden. Hierdurch kann ein oberseitig durch die Oberschale begrenzter Schlafraum oder Aufenthaltsraum flächig beheizt werden.

Der eingebrachte Schaumkern kann mit mindestens einer Textillage bedeckt werden, um eine Verbesserung des Komforts bei der Benutzung eines Aufstelldachs oder Schlafdachs mit einer erfindungsgemäßen Oberschale zu erzielen.

Die Oberschale kann beispielsweise aus einem metallischen Werkstoff bzw. Metall, aus einem Kunststoff, einem glasfaserverstärkten Kunststoff, Kohlefaserverbundwerkstoff und dergleichen bestehen. Dabei können die Basisschale und/oder die Randelemente aus einem identischen oder voneinander abweichenden Material bestehen.

Gemäß einem weiteren Ausführungsbeispiel ist auf der Oberseite der Oberschale mindestens eine Beschichtung, eine Lackierung, mindestens eine Solarzelle und/oder mindestens eine Antenne angeordnet oder in die Oberseite integriert. Durch diese Maßnahme kann die Oberschale vielseitig ausgestaltet sein und weitere Funktionen umfassen.

Die Oberfläche der Oberschale kann dabei vorteilhafterweise in einer Farbe eines Fahrzeugs oder in einer abweichenden Farbe lackiert werden. Dabei kann die Farbe auch in Form eines lackierten oder eingefärbten Kunststoffs umgesetzt werden.

Nach einem weiteren Aspekt der Erfindung wird eine Anordnung bereitgestellt. Die Anordnung weist eine erfindungsgemäße Oberschale und eine Unterschale auf. Die Oberschale ist durch mindestens eine randseitige Wandung mit der Unterschale verbunden. Die Wandung kann beispielsweise aus einem Textilmaterial und/oder einem Kunststoff bestehen und vorteilhafterweise faltbar sein. Darüber hinaus ist die Oberschale mittels einer Aufstellfunktion von der Unterschale beabstandbar bzw. aufklappbar, um einen Innenraum auszubilden. Der Innenraum kann als ein Schlafraum oder als ein Abstellraum oder als ein zusätzlicher Höhenraum ausgestaltet sein. Die Unterschale ist bevorzugterweise auf einem Fahrzeugdach angeordnet. Das Fahrzeugdach und/oder ein Dachabschnitt des Fahrzeugs können hierbei als ein Bestandteil der Anordnung ausgeführt sein.

Durch die Verwendung von der modularen Oberschale kann diese optimal an eine Dachgeometrie des Fahrzeugdachs und die Abmessungen des Fahrzeugdachs angepasst werden. Hierdurch kann die Oberschale den verfügbaren Raum auf dem Fahrzeugdach optimal ausnutzen und beispielsweise als eine geometrisch passende Verlängerung des Fahrzeugdachs in Höhenrichtung fungieren.

Das Fahrzeugdach kann beispielsweise ein Dach eines als Freizeitfahrzeug ausgeführten Fahrzeugs sein. Ein derartiges Fahrzeug kann ein Camper Van, ein teilintegriertes Wohnmobil, ein vollintegriertes Wohnmobil oder ein Wohnanhänger sein, welches zumindest ein Schlafdach aufweist.

Bei einer Ausführungsform ist die Oberschale in einem aufgeklappten Zustand entlang einer Höhenrichtung von der Unterschale beabstandet. Bevorzugterweise weist die Oberschale mindestens eine Dichtung auf, welche in einem geschlossenen Zustand der Oberschale zumindest bereichsweise auf dem Fahrzeugdach aufliegt. Hierdurch kann der Unterschale und die Wandung in einem geschlossenen Zustand der Oberschale gegenüber externen Einflüssen geschützt werden. Die entsprechende Dichtung kann in Form von Dichtungsabschnitten ausgeführt sein, die jeweils auf einem Randelement angebracht oder in das jeweilige Randelement integriert sein können.

Die mindestens eine Dichtung kann besonders vielseitig ausgestaltet sein, wenn diese innenliegend oder außenliegend an der Oberschale angeordnet ist und/oder mindestens eine elektrische und/oder hydraulische und/oder pneumatische Durchführung aufweist. Eine innenliegende Dichtung kann beispielsweise von außen nicht sichtbar angeordnet sein. Die jeweiligen Durchführungen können auch Verbindungsleitungen zu Sensoren oder Aktuatoren umfassen. Darüber hinaus können die Durchführen dazu eingesetzt werden, eine elektrische, hydraulische oder pneumatische Ansteuerung einer automatisierten Öffnungsfunktion und Schließfunktion der Oberschale zu betätigen.

Gemäß einem weiteren Aspekt der Erfindung wird ein Verfahren zum Herstellen einer Oberschale durch eine erfindungsgemäße Vorrichtung bzw. Herstellungsvorrichtung mit mindestens einem Stempel und mit mindestens einer Matrize bereitgestellt. Die erfindungsgemäße Herstellungsvorrichtung kann dazu eingerichtet sein, das Verfahren auszuführen und in ihren Abmessungen variabel einstellbare Oberschalen herzustellen.

In einem Schritt des Verfahrens werden der Stempel und/oder die Matrize in ihren Abmessungen entlang zumindest einer Raumrichtung eingestellt. Anstelle der Matrize kann auch eine Flüssigkeit oder ein Gas eingesetzt werden, um eine Umformung in Verbindung mit dem Stempel zu bewirken.

Mindestens ein Material wird auf dem in seinen Abmessungen eingestellten Stempel positioniert und durch Einwirkung der Matrize umgeformt wird. Das Material kann in Form eines Rohlings, beispielsweise ein Blech, ausgeführt sein. Das Material kann ein Metall, wie beispielsweise Aluminium, oder ein Kunststoff, wie beispielsweise ABS, sein.

Durch das Verfahren kann gezielt eine Oberschale hergestellt werden, die an ein bestimmtes Fahrzeugmodell angepasst ist. Das Umformen kann beispielsweise durch Tiefziehen von thermoverformbaren Plattenwerkstoffen erfolgen. Nach dem Umformen des Materials zu einer Oberschale kann diese bodenseitig bzw. im Bereich eines ausgebildeten Hohlraums mit einem Schaum versehen werden. Neben dem Schaum als Isolierung kann auch eine Verstrebung bzw. ein Verstärkungsstruktur eingesetzt werden.

Das erfindungsgemäße Verfahren ermöglicht die Herstellung von Oberschalen mit einer Gewichtseinsparung von bis zu 30%

Die Erfindung wird nun in Bezug auf die beiliegenden Zeichnungen näher beschrieben. In den Zeichnungen zeigen:
- Fig. 1: eine perspektivische Darstellung einer Oberschale gemäß einer ersten Ausführungsform der Erfindung;
- Fig. 2: eine Schnittansicht der Oberschale aus Fig. 1;
- Fig. 3:: schematische Herstellungsschritte zum Veranschaulichen eines Verfahrens gemäß einer Ausführungsform der Erfindung;
- Fig. 4: eine Schnittdarstellung einer Oberschale gemäß einer zweiten Ausführungsform der Erfindung;
- Fig. 5: eine Schnittdarstellung einer Oberschale gemäß einer dritten Ausführungsform der Erfindung;

In den Figuren sind gleiche oder einander entsprechende Elemente mit den gleichen Bezugszeichen gekennzeichnet. Faktoren wie beispielsweise numerische Werte, Formen, Komponenten, Positionen von Komponenten und die Weise, wie die Komponenten miteinander verbunden sind, sind lediglich illustrativ und nicht einschränkend. In den Zeichnungen sind aus Gründen der Übersicht und zur Verbesserung der Erkennbarkeit teilweise unterschiedliche Maßstäbe verwendet.

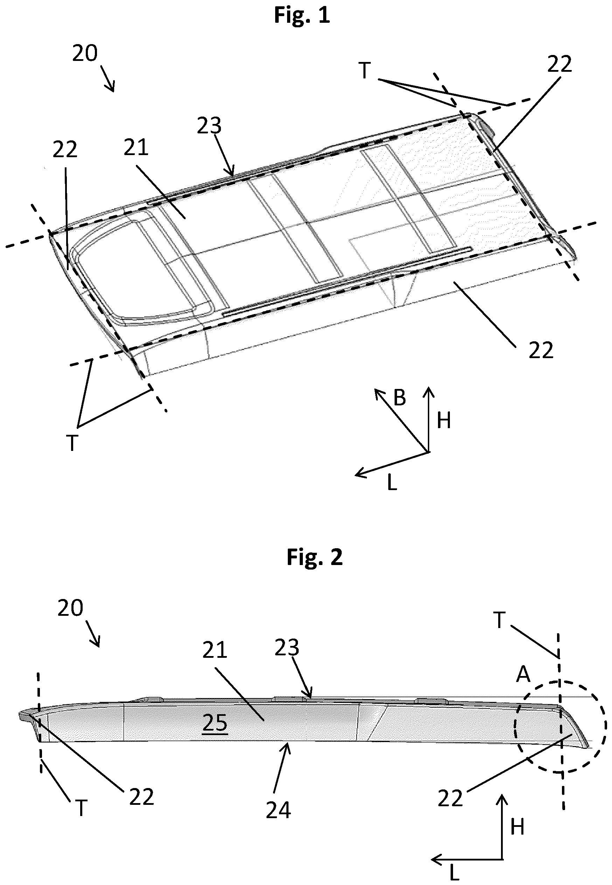

Die Fig. 1 zeigt eine perspektivische Darstellung einer Oberschale 20 gemäß einer ersten Ausführungsform der Erfindung. In der Fig. 2 ist ein Längsschnitt der Oberschale 20 aus Fig. 1 gezeigt. Die Oberschale 20 ist für ein Aufstelldach oder ein Schlafdach vorgesehen, welches auf einem nicht dargestellten Fahrzeugdach anbringbar ist.

Die Oberschale 20 weist zumindest eine Basisschale 21 und mindestens ein Randelement 22 auf. Das mindestens eine Randelement 22 ist dazu eingerichtet, die Basisschale 21 entlang zumindest einer Raumrichtung L, B, H randseitig zu verlängern. Ein Verlängern kann hierbei ein Vergrößern einer Abmessung der Oberschale 20 in einer Höhenrichtung H und/oder in einer Breitenrichtung B und/oder in einer Längenrichtung L der Oberschale 20 umfassen. Die Längenrichtung L kann beispielsweise einer Fahrtrichtung eines Fahrzeugs mit der angeordneten Oberschale 20 entsprechen.

Im dargestellten Ausführungsbeispiel wird die Oberschale 20 in Längenrichtung L und in Breitenrichtung B vergrößert. Hierfür sind in Längenrichtung L und in Breitenrichtung B jeweils beidseitig der Basisschale 21 Randelemente 22 angeordnet.

Die Basisschale 21 bildet im gezeigten Ausführungsbeispiel einen mittigen bzw. zentralen Abschnitt der Oberschale 20, welcher im Wesentlichen rechteckig geformt ist. In der Fig. 1 und der Fig. 2 sind die Trennebenen T zwischen den Randelementen 22 und der Basisschale 21 visualisiert, um das Wirkprinzip der modular aufgebauten Oberschale 20 zu verdeutlichen.

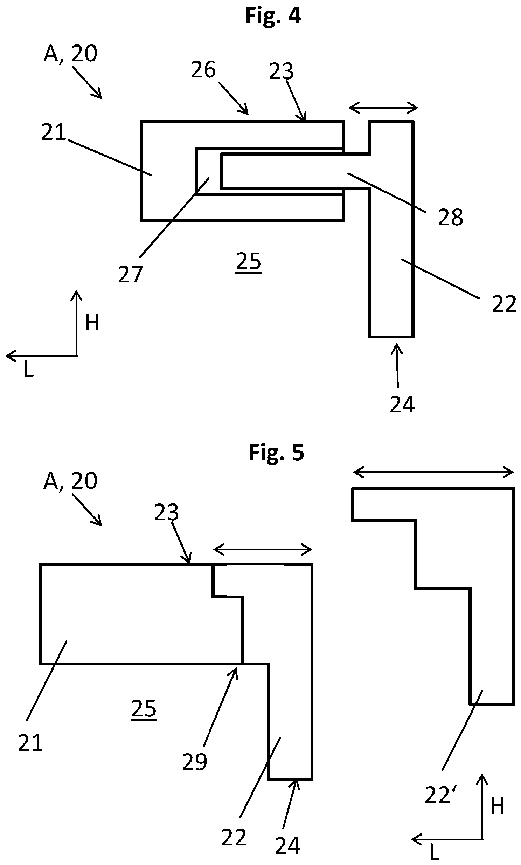

Nach einem Einstellen einer bestimmten Dimension der Oberschale 20 durch eine Wahl von Randelementen 22 mit einer bestimmten Abmessung werden die Randelemente 22 mit der Basisschale 21 fest verbunden. Dieser Schritt kann beispielsweise durch Schweißen, Nieten, Löten, Verschrauben und dergleichen erfolgen. Derartige Wahl von bestimmten Randelementen 22 aus einer Gruppe von Randelementen 22, 22' ist in der Fig. 5 verdeutlicht.

Bei einer alternativen oder zusätzlichen Ausgestaltung, welche in der Fig. 4 gezeigt ist, ist das mindestens eine Randelement 22 entlang zumindest einer Raumrichtung L, B, H relativ zu der Basisschale 22 verstellbar. Hierdurch kann das Randelement 22 relativ zu der Basisschale 21 verschoben werden, sodass eine stufenlose Anpassung der Abmessung der Oberschale 20 ermöglicht wird.

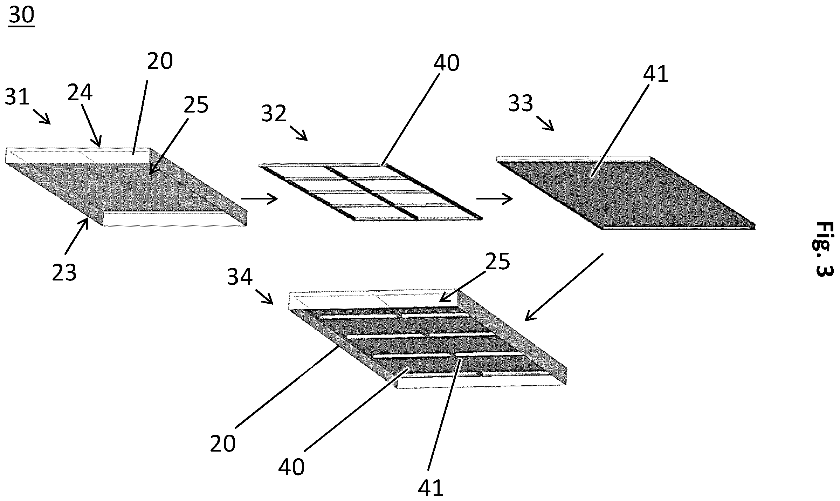

Die Fig. 3 schematische Herstellungsschritte zum Veranschaulichen eines Verfahrens 30 gemäß einer Ausführungsform der Erfindung. Das Verfahren dient zum Herstellen der Oberschale 20 durch eine nicht dargestellte Vorrichtung bzw. Herstellungsvorrichtung mit mindestens einem Stempel und mit mindestens einer Matrize. Die Herstellungsvorrichtung kann dazu eingerichtet sein, das Verfahren 30 auszuführen und in ihren Abmessungen variabel einstellbare Oberschalen 20 in einteiliger Form herzustellen. Zum Veranschaulichen des Verfahrens 30 ist die Oberschale 30 im Wesentlichen kastenförmig ausgestaltet. Die jeweiligen Randelemente 22 können beispielsweise auch Rundungen, Wölbungen und dergleichen aufweisen.

In einem Schritt 31 des Verfahrens 30 werden der Stempel und/oder die Matrize in ihren Abmessungen entlang zumindest einer Raumrichtung eingestellt. Mindestens ein Material, beispielsweise ein Metallblech, wird auf dem in seinen Abmessungen eingestellten Stempel positioniert und durch Einwirkung der Matrize umgeformt. Eine entsprechend ausgebildete Oberschale 31 weist eine Oberseite 23 und eine Unterseite 24 auf.

Auf der Unterseite 24 der Oberschale 20 ist ein Hohlraum 25 ausgebildet. In einem weiteren Schritt 32 des Verfahrens 30 wird eine Rahmenstruktur 40 in dem Hohlraum 25 positioniert.

Die in dem Hohlraum 25 angeordnete Rahmenstruktur 40 wird anschließend in einem weiteren Schritt 33 durch einen PU-Schaum ausgeschäumt, sodass der Hohlraum 25 zumindest bereichsweise mit einer Schaumisolierung 41 ausgefüllt ist. Die im Schritt 34 des Verfahrens 30 resultierende Oberschale 20 weist somit eine Schaumisolierung 41 mit einer integrierten Rahmenstruktur 40 auf.

In der Fig. 4 eine Schnittdarstellung einer Oberschale 20 gemäß einer zweiten Ausführungsform der Erfindung gezeigt. Insbesondere ist eine Detailansicht A aus der Fig. 2 illustriert, um eine Verbindung zwischen der Basisschale 21 und einem Randelement 22 zu verdeutlichen. Im gezeigten Ausführungsbeispiel sind die Basisschale 21 und das mindestens eine Randelement 22 zumindest bereichsweise mit Hilfe einer Überlappverbindung 26 miteinander gekoppelt. Hierdurch ist die Oberschale 20 variabel in ihrer Dimension ausgestaltet. Das einseitig angeordnete Randelement 22 begrenzt den Hohlraum 25 randseitig in Längenrichtung L.

Die Überlappverbindung 26 besteht beispielhaft aus einer Feder-Nut-Verbindung, die in Längenrichtung L ausgebildet ist. Eine Nut 27 ist beispielsweise seitlich bzw. randseitig in die Basisschale 21 eingebracht. In diese Nut 27 kann eine Feder 28 des Randelements 22 hineinragen. Dabei kann eine Tiefe des Hineinragens der Feder 28 des Randelements 22 individuell eingestellt werden. Nach einem Einstellen der Abmessung, welche durch den Pfeil visualisiert ist, kann die Überlappverbindung 26, beispielsweise durch Nieten oder Schweißen, fixiert werden.

In der Fig. 5 ist eine Schnittdarstellung einer Oberschale 20 gemäß einer dritten Ausführungsform der Erfindung gezeigt. Im Unterschied zum in Fig. 4 gezeigten Ausführungsbeispiel erfolgt hier eine Anpassung der Oberschale 20 an unterschiedlich dimensionierte Fahrzeugdächer und unterschiedlich geformte Fahrzeugdächer durch austauschbar ausgestaltete Randelemente 22, 22'. Beispielhaft sind ein in Längenrichtung L kürzer ausgestaltetes Randelement 22 und ein in Längenrichtung L länger ausgestaltetes Randelement 22' gezeigt. Je nach gewünschter Vergrößerung der Oberschale 20 kann eines der Randelemente 22, 22' mit der Basisschale 21 verbunden werden.

Die Verbindung zwischen der Basisschale 21 und dem Randelement 22, 22' erfolgt beispielhaft durch einen formschlüssigen Verbindungsabschnitt 29. Alternativ oder zusätzlich kann eine Überlappverbindung 26 entsprechend der Fig. 4 eingesetzt werden, um die Basisschale 21 und das Randelement 22, 22' miteinander zu verbinden. Der Verbindungsabschnitt 29 kann beispielsweise geklebt oder geschweißt werden, um eine dauerhafte Verbindung zwischen der Basisschale 21 und dem Randelement 22, 22' auszubilden.

Es sind der Einfachheit halber nur zwei Randelemente 22, 22' gezeigt, jedoch kann eine Gruppe von unterschiedlich Großen, von unterschiedliche geformten und von Randelementen 22, 22' mit unterschiedlichen integrierten Funktionen vorgesehen sein, aus welcher ein Randelement 22, 22' entsprechend einem Kundenwunsch auswählbar ist.

### Bezugszeichenliste:

- 20: Oberschale
- 21: Basisschale
- 22: Randelement
- 23: Oberseite
- 24: Unterseite
- 25: Hohlraum
- 26: Überlappverbindung
- 27: Nut
- 28: Feder
- 29: Verbindungsabschnitt

- 30: Verfahren
- 31: Umformen und Herstellen einer Oberschale
- 32: Einbringen einer Rahmenstruktur
- 33: Ausschäumen des Hohlraums
- 34: Fertigstellen der Oberschale mit einer Schaumisolierung

- 40: Rahmenstruktur
- 41: Schaumisolierung

- B: Breitenrichtung
- H: Höhenrichtung
- L: Längenrichtung
- T: Trennebene zwischen Randelement und Basisschale

## Patentansprüche

1. Oberschale (20) für ein Aufstelldach oder ein Schlafdach, aufweisend zumindest eine Basisschale (21) und aufweisend mindestens ein Randelement (22), wobei das mindestens eine Randelement (22) dazu eingerichtet ist, die Basisschale (21) entlang zumindest einer Raumrichtung (L, B, H) randseitig zu verlängern, wobei das mindestens eine Randelement (22) entlang zumindest einer Raumrichtung (L, B, H) relativ zu der Basisschale (21) verstellbar und/oder das mindestens eine Randelement (22) austauschbar ist und mit der Basisschale (21) verbindbar ist.

2. Oberschale nach Anspruch 1, wobei das mindestens eine Randelement (22) zumindest bereichsweise mit der Basisschale (21) überlappend angeordnet und relativ zu der Basisschale (21) verstellbar ausgeführt ist, wobei das mindestens eine Randelement (22) dazu eingerichtet ist, die Basisschale (21) zu verbreitern und/oder zu verlängern, wobei das mindestens eine Randelement (22) ortsfest mit der Basisschale (21) verbindbar ist.

3. Oberschale nach Anspruch 2, wobei das mindestens eine Randelement (22) durch mindesten eine Schiene und/oder eine Überlappverbindung (26) überlappend mit der Basisschale (21) verbunden und relativ zu der Basisschale (21) verschiebbar ausgeführt ist.

4. Oberschale nach Anspruch 1, wobei eine Länge und/oder eine Breite der Basisschale (21) durch das mindestens eine austauschbar ausgestaltete Randelement (22, 22') einstellbar ist, wobei die Länge und/oder eine Breite der Basisschale (21) durch mindestens ein Randelement (22) aus einer Gruppe von Randelementen (22, 22') mit unterschiedlichen Abmessungen einstellbar ist.

5. Oberschale nach Anspruch 4, wobei die Basisschale (21) durch eine Verbindung (29) mit mindestens einem Randelement (22) mit mindestens einer Funktion ausstattbar ist.

6. Oberschale nach einem der Ansprüche 1 bis 5, wobei die Basisschale (21) und das mindestens eine Randelement (22) durch eine stoffschlüssige, eine formschlüssige und/oder reibschlüssige Verbindung miteinander verbindbar sind, und/oder wobei die Basisschale (21) und das mindestens eine Randelement (22) durch ein Einbringen einer Schaumisolierung (41) und/oder einer Rahmenstruktur (40) miteinander verbindbar sind.

7. Oberschale nach Anspruch 6, wobei die Basisschale (21) und das mindestens eine Randelement (21) eine Oberseite (23) und eine Unterseite (24) aufweisen, wobei auf der Unterseite (24) der Oberschale (20) ein Hohlraum (25) ausgebildet ist und die Schaumisolierung (41) und/oder die Rahmenstruktur (40) in den Hohlraum (40) einbringbar sind.

8. Oberschale nach Anspruch 7, wobei auf der Oberseite (23) der Oberschale (20) mindestens eine Beschichtung, eine Lackierung, mindestens eine Solarzelle und/oder mindestens eine Antenne angeordnet oder in die Oberseite (23) integriert sind.

9. Anordnung, aufweisend eine Oberschale (20) gemäß einem der vorhergehenden Ansprüche und aufweisend eine Unterschale, wobei die Oberschale (20) durch mindestens eine randseitige Wandung mit der Unterschale verbunden ist und mittels einer Aufstellfunktion von der Unterschale beabstandbar ist, um einen Innenraum auszubilden, wobei die Unterschale auf einem Fahrzeugdach angeordnet ist.

10. Anordnung nach Anspruch 9, wobei die Oberschale (20) in einem aufgeklappten Zustand entlang einer Höhenrichtung (H) von der Unterschale beabstandet ist, wobei die Oberschale (20) mindestens eine Dichtung aufweist, wobei die Dichtung in einem geschlossenen Zustand der Oberschale (20) zumindest bereichsweise auf dem Fahrzeugdach aufliegt.

11. Anordnung nach Anspruch 10, wobei die mindestens eine Dichtung innenliegend oder außenliegend an der Oberschale (20) angeordnet ist und/oder mindestens eine elektrische und/oder hydraulische und/oder pneumatische Durchführung aufweist.

12. Verfahren (20) zum Herstellen einer Oberschale (20) durch eine Vorrichtung mit mindestens einem Stempel und mit mindestens einer Matrize, wobei der Stempel und/oder die Matrize in ihren Abmessungen entlang zumindest einer Raumrichtung (L, B, H) eingestellt werden, mindestens ein Material auf dem in seinen Abmessungen eingestellten Stempel positioniert und durch Einwirkung der Matrize umgeformt wird.
